(19) Europäisches Patentamt European Patent Office Office européen des brevets

(11) **EP 4 462 361 B1**

(12) **EUROPEAN PATENT SPECIFICATION**

(45) Date of publication and mention
of the grant of the patent:
**17.12.2025 Bulletin 2025/51**

(21) Application number: **23866666.3**

(22) Date of filing: **20.07.2023**

(51) International Patent Classification (IPC):
$G06T\ 7/73$ (2017.01)    $G06V\ 10/762$ (2022.01)
$G06V\ 20/58$ (2022.01)    $G06V\ 10/82$ (2022.01)

(52) Cooperative Patent Classification (CPC):
**G06V 20/58; G06T 7/11; G06T 7/593;**
**G06V 10/762;** G06T 2207/10016;
G06T 2207/20076; G06T 2207/20081;
G06T 2207/20084; G06T 2207/30244;
G06T 2207/30252; Y02T 10/40

(86) International application number:
**PCT/CN2023/108299**

(87) International publication number:
**WO 2024/198171 (03.10.2024 Gazette 2024/40)**

(54) **MONOCULAR RANGING METHOD AND APPARATUS FOR INTELLIGENT DRIVING OF VEHICLE, AND DEVICE, MEDIUM AND VEHICLE**

MONOKULARES ENTFERNUNGSMESSUNGSVERFAHREN UND VORRICHTUNG FÜR INTELLIGENTES FAHREN EINES FAHRZEUGS SOWIE VORRICHTUNG, MEDIUM UND FAHRZEUG

PROCÉDÉ ET APPAREIL DE TÉLÉMÉTRIE MONOCULAIRE DE CONDUITE INTELLIGENTE DE VÉHICULE, ET DISPOSITIF, SUPPORT ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.03.2023 CN 202310309920**

(43) Date of publication of application:
**13.11.2024 Bulletin 2024/46**

(73) Proprietor: **Changzhou Xingyu Automotive Lighting Systems Co., Ltd.**
**Changzhou, Jiangsu 213022 (CN)**

(72) Inventors:
• **LIU, Yu**
**Changzhou, Jiangsu 213022 (CN)**
• **XU, Jian**
**Changzhou, Jiangsu 213022 (CN)**
• **LIANG, Zizhen**
**Changzhou, Jiangsu 213022 (CN)**

• **HUANG, Li**
**Changzhou, Jiangsu 213022 (CN)**

(74) Representative: **Lorenz Seidler Gossel Part. mbB**
**Widenmayerstr. 23**
**80538 München (DE)**

(56) References cited:
**CN-A- 102 278 960    CN-A- 110 207 702**
**CN-A- 111 829 484    CN-A- 112 356 815**
**CN-A- 114 332 187    CN-A- 116 012 453**
**US-A1- 2021 303 916    US-A1- 2022 057 806**

• **LIQIN HUANG ET AL: "Measuring the absolute distance of a front vehicle from an in-car camera based on monocular vision and instance segmentation", JOURNAL OF ELECTRONIC IMAGING., vol. 27, no. 04, 24 July 2018 (2018-07-24), US, pages 1, XP055716566, ISSN: 1017-9909, DOI: 10.1117/1.JEI.27.4.043019**

**(Cont. next page)**

- ZHE TING ET AL: "Inter-Vehicle Distance Estimation Method Based on Monocular Vision Using 3D Detection", IEEE TRANSACTIONS ON VEHICULAR TECHNOLOGY, IEEE, USA, vol. 69, no. 5, 29 February 2020 (2020-02-29), pages 4907 - 4919, XP011788329, ISSN: 0018-9545, [retrieved on 20200514], DOI: 10.1109/TVT.2020.2977623
- KLINGNER MARVIN ET AL: "Improving Online Performance Prediction for Semantic Segmentation", 2021 IEEE/CVF CONFERENCE ON COMPUTER VISION AND PATTERN RECOGNITION WORKSHOPS (CVPRW), IEEE, 19 June 2021 (2021-06-19), pages 1 - 11, XP033967534, DOI: 10.1109/CVPRW53098.2021.00009
- KUMAR VARUN RAVI ET AL: "SynDistNet: Self-Supervised Monocular Fisheye Camera Distance Estimation Synergized with Semantic Segmentation for Autonomous Driving", 2021 IEEE WINTER CONFERENCE ON APPLICATIONS OF COMPUTER VISION (WACV), IEEE, 3 January 2021 (2021-01-03), pages 61 - 71, XP033926731, DOI: 10.1109/WACV48630.2021.00011

**Description**

**TECHNICAL FIELD**

The present disclosure relates to the technical field of intelligent driving, and in particular, to a monocular ranging method and a data processing apparatus, and a computer program, a medium, and a vehicle thereof.

**BACKGROUND**

In an advanced driver assistance system (ADAS), vehicle-mounted sensors monitor the surrounding environment, collect data, and identify, detect, and track static and dynamic objects at any time, and perform systematic computation and analysis based on navigator map data, so that the driver can be aware of possible dangers in advance and the driving comfort and safety are effectively increased. Front vehicle ranging is one of the basic requirements of the ADAS and is commonly used in functions such as adaptive cruise control (ACC) and autonomous emergency braking (AEB) of a vehicle. Therefore, the measurement accuracy of the distance to the vehicle ahead is required to be high.

The existing ranging methods based on binocular vision systems mainly estimate the distances to obstacles in a scene through parallax between two cameras, which leads to a large amount of computation. To ensure the accuracy, the computing capabilities of the processing unit are required to be high, and the two cameras are horizontally coaxial and feature parallel optical axes, synchronous acquisition, and consistent exposure parameters. Therefore, these methods have great limitations in practical application. In addition, the cost of the two cameras and the processing unit of high computing capabilities is high.

US 2022/057806 A1 relates to a method for automated driving detects obstacles from unknown objects using a neural network that generates depth and segmentation maps in parallel, applies optical modeling to assess obstacle relevance, and adjusts vehicle planning based on obstacle height and distance. Liqin Huang ET AL: "Measuring the absolute distance of a front vehicle from an in-car camera based on monocular vision and instance segmentation", JOURNAL OF ELECTRONIC IMAGING., vol. 27, no.04, 24 July 2018 relates to a method adopting monocular vision with instance segmentation and camera focal length to detect the absolute distance of front cars from in-car cameras. ZHE THING ET AL: "Inter-Vehicle Distance Estimation Method Based on Monocular Vision Using 3D Detection", IEEE TRANSACTIONS ON VEHICULAR TECHNOLOGY, IEEE, USA, vol. 69, no. 5, 29 February 2020, pages 4907-4919 discloses an area-distance ranging geometry model based on the principle of camera projection. Using the advantages of 3D detection, the vehicle 3D detection and the ranging geometry model are combined to propose a robust inter-vehicle distance estimation method based on vehicle-mounted monocular vision. KLINGNER MARVIN ET AL: "Improving Online Performance Prediction for Semantic Segmentation", 2021 IEEE/CVF CONFERENCE ON COMPUTER VISION AND PATTERN RECOGNITION WORKSHOPS (CVPRW), IEEE, 19 June 2021, pages 1 - 11 relates to online performance prediction of semantic segmentation DNNs based on the monocular estimation of depth, its subsequent evaluation using, e.g., LiDAR output, and finally a regression to predict the segmentation performance.

**SUMMARY**

To solve the technical problem in the prior art that the existing ranging methods cannot take into account the measurement accuracy, application limitations, and cost, the present disclosure provides a monocular ranging method for intelligent driving, which improves the measurement accuracy, is not limited in use, and has a low cost.

The present disclosure solves the technical problem by using the following technical solutions. A monocular ranging method for intelligent driving according to claim 1 is provided, which includes the following steps:

> step S1: reading image information frame by frame from video streams captured by a vehicle-mounted monocular camera;
> step S2: inputting the image information into a first convolutional neural network model for detection to obtain a vehicle instance segmentation image and a depth map, the vehicle instance segmentation image containing a detection box of at least one target;
> step S3: extracting a rectangular box corresponding to the detection box of each target, segmenting the vehicle instance segmentation image according to the rectangular box to obtain a region of interest (ROI) image corresponding to the target, and inputting the ROI image into a second convolutional neural network model for detection to obtain information of the target,
> the information of the target including a category and an actual height of the target and a height of the target in the image;
> step S4: extracting a depth ROI image according to the detection box of the target and the depth map, and computing a minimum pixel distance in the depth ROI image by using a clustering computation model to obtain pixel coordinates s(u,v), the minimum pixel distance being a first distance D1 from the vehicle-mounted monocular camera to the target in real space;

step S5: computing a second distance D2 from the vehicle-mounted monocular camera to the target in real space by using a geometric ranging model based on the information of the target and the pixel coordinates s(u,v); and

step S6: performing fusion computing on the first distance D1 and the second distance D2 to finally obtain a distance from the vehicle-mounted monocular camera to the target in real space.

The clustering computation model in the step S4 specifically includes:

S41: setting n pixels in the depth ROI image, each of the pixels being a cluster S and a depth value corresponding to the pixel being $d_n$ during initial computation;

S42: computing a distance between every two of the clusters and merging the two closest clusters into one cluster;

S43: repeating the step S42 till the distance between every two of the clusters is greater than a threshold T; and

S44: counting a number of all the pixels in each of the two clusters to obtain the cluster $S_{Max}$ with a maximum number of pixels, and reading the depth value corresponding to each of the pixels in the cluster $S_{Max}$ to obtain a minimum depth value $d_{min}$ and a pixel corresponding to the minimum depth value in the cluster $S_{Max}$, the minimum depth value $d_{min}$ being the minimum pixel distance, where

when one minimum depth value $d_{min}$ exists, the pixel coordinates s(u,v) corresponding to the minimum depth value $d_{min}$ are obtained; or

when a plurality of minimum depth values $d_{min}$ exist, a plurality of pixel coordinates are obtained; an optical axis of the vehicle-mounted monocular camera intersects with the pixel coordinate system *o-uv* at $m(u_0,v_0)$, a Euclidean distance from each of the pixels to the point m is computed, and when the Euclidean distance is minimum, the pixel coordinates s(u,v) corresponding to the minimum depth value $d_{min}$ are obtained.

The step S6 specifically includes: acquiring a standard deviation $\sigma 1$ of the first distance D1 and a standard deviation $\sigma 2$ of the second distance D2 and computing a distance fusion standard deviation by the following formula:

$$k = \sigma 1^2 \Big/ \left( \sigma 1^2 + \sigma 2^2 \right)^2 ;$$

finally obtaining a distance D3 from the vehicle-mounted monocular camera to the target in real space according to the distance fusion standard deviation by the following formula:

$$D3 = D1 + k(D1\text{-}D2).$$

Further, the extracting of the rectangular box corresponding to the detection box of each target in the step S3 specifically includes the following steps:

S31: creating a pixel coordinate system *o-uv*;

S32: acquiring an upper boundary point $(u_t,v_t)$, a lower boundary point $(u_d,v_d)$, a left boundary point $(u_l,v_l)$, and a right boundary point $(u_r,v_r)$ of the detection box of the target; and

S33: drawing a rectangular box corresponding to the detection box of the target according to the coordinates of the upper boundary point, the lower boundary point, the left boundary point, and the right boundary point, the height of the target in the image being $h=v_d\text{-}v_t$.

Further, the geometric ranging model in the step S5 specifically includes:

S51: creating a camera coordinate system O-XYZ with the vehicle-mounted monocular camera as an origin, a Z-axis of the camera coordinate system being perpendicular to a plane of the pixel coordinate system *o-uv*; and

S52: when the pixel coordinates are s(u,v) in the pixel coordinate system *o-uv*, the optical axis intersects with the pixel coordinate system *o-uv* at $m(u_0,v_0)$, the actual height of the target is *H*, the height of the target in the image is *h*, S(x,y,z) is the closest point of the target in the camera coordinate system, an SMN plane is parallel to the imaging plane, the optical axis intersects with the SMN plane at M, and the coordinates of M are (0,0,z) in the camera coordinate system, computing the second distance D2 from the vehicle-mounted monocular camera to the target in real space by the following formulas:

$$d_z = (H \times f_y)/h$$

$$\Delta u = u - u_0$$

$$\Delta v = v - v_0$$

$$d_x = (d_z \times \Delta u)/f_x$$

$$d_y = (d_z \times \Delta v)/f_y$$

$$D2 = \sqrt{d_x^2 + d_y^2 + d_z^2},$$

where $d_z$ is a distance of OM, $d_x$ is a distance from S to an OYZ plane, $d_y$ is a distance from S to an OXZ plane, $f_x$ and $f_y$ are intrinsic parameters of the vehicle-mounted monocular camera, $\Delta u$ is a distance difference between the pixel s and the point m on a u-axis, and $\Delta v$ is a distance difference between the pixel s and the point m on a v-axis.

Further, specifically, a Kalman filtering algorithm is used to process the distance D3 finally obtained from the vehicle-mounted monocular camera to the target in real space.

A data processing apparatus is provided comprising means for carrying out the steps of the method including:

a first acquisition module, configured to read image information frame by frame from video streams captured by a vehicle-mounted monocular camera;

a first detection module, configured to input the image information into a first convolutional neural network model for detection to obtain a vehicle instance segmentation image and a depth map, the vehicle instance segmentation image containing a detection box of at least one target;

a second detection module, configured to extract a rectangular box corresponding to the detection box of each target, segment the vehicle instance segmentation image according to the rectangular box to obtain a ROI image corresponding to the target, and input the ROI image into a second convolutional neural network model for detection to obtain information of the target,

the information of the target including a category and an actual height of the target and a height of the target in the image;

a first computing module, configured to extract a depth ROI image according to the detection box of the target and the depth map, and compute a minimum pixel distance in the depth ROI image by using a clustering computation model to obtain pixel coordinates s(u,v), the minimum pixel distance being a first distance D1 from the vehicle-mounted monocular camera to the target in real space;

a second computing module, configured to compute a second distance D2 from the vehicle-mounted monocular camera to the target in real space by using a geometric ranging model based on the information of the target and the pixel coordinates s(u,v); and

a fusion computing module, configured to perform fusion computing on the first distance D1 and the second distance D2 to finally obtain a distance from the vehicle-mounted monocular camera to the target in real space.

A computer program is provided, comprising instruction which, when the program is executed by a computer, cause the compter to carry out the steps of the method. A computer readable storage medium is provided. The computer readable storage medium stores computer programs, and a processor executes the computer programs to implement the monocular ranging method for intelligent driving.

A vehicle is provided, which includes the data processing apparatus.

The present disclosure has the following advantages.

(1) The distances to obstacles in a scene are estimated through the video streams captured by the vehicle-mounted monocular camera, instead of through parallax between two cameras in the prior art, so that the present application is not limited in use and can be applied at a low cost.

(2) After the original image information is processed, the first distance is computed by using the clustering algorithm model, so that the external interference is effectively removed and the first distance is highly accurate. The second distance is computed by using the geometric ranging model based on the actual data obtained, and the second distance is highly accurate. Fusion computing is performed on the first distance and the second distance to finally obtain the distance to the vehicle ahead in real space. Compared with the monocular ranging in the prior art, the present disclosure achieves higher measurement accuracy and the requirement on the computing capabilities of the processing unit is relatively low, which further reduces the cost.

## BRIEF DESCRIPTION OF THE DRAWINGS

The present disclosure is further described below with reference to the accompanying drawings and embodiments.

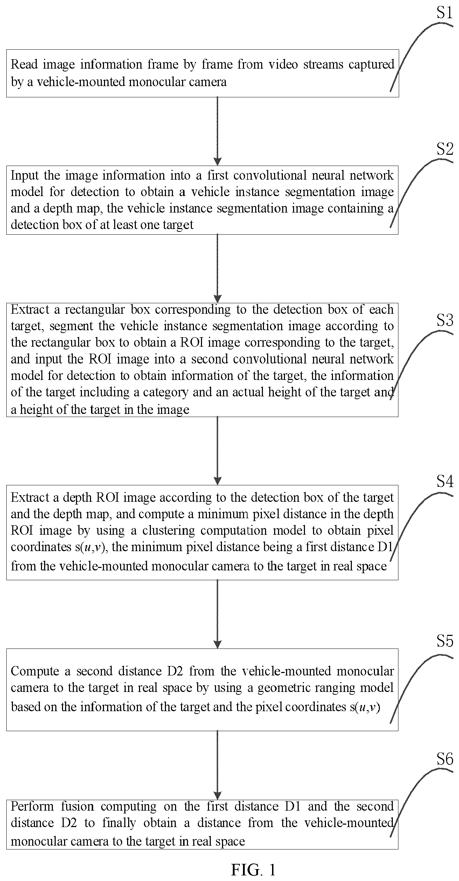

FIG. 1 is a schematic flowchart of Embodiment 1 of the present disclosure.
FIG. 2 is a schematic diagram of image information according to Embodiment 1 of the present disclosure.
FIG. 3 is a schematic diagram of a vehicle instance segmentation image according to Embodiment 1 of the present disclosure.
FIG. 4 is a schematic diagram of a depth map according to Embodiment 1 of the present disclosure.
FIG. 5 is a schematic diagram of a detection box of a target in a pixel coordinate system according to Embodiment 1 of the present disclosure.
FIG. 6 shows a part of a depth ROI image according to Embodiment 1 of the present disclosure.
FIG. 7 is a schematic diagram showing the computation of the distance between two clusters according to Embodiment 1 of the present disclosure.
FIG. 8 is a schematic diagram showing the principle of a geometric ranging model according to Embodiment 1 of the present disclosure.
FIG. 9 is a schematic structural diagram of Embodiment 2 of the present disclosure.
FIG. 10 is a schematic structural diagram of hardware according to Embodiment 3 of the present disclosure.

In the drawings: 20. monocular ranging apparatus; 200. first acquisition module; 201. first detection module; 202. second detection module; 203. first computing module; 204. second computing module; 205. fusion computing module; 10. computer device; 1002. processor; 1004. memory; 1006. transmission device.

## DETAILED DESCRIPTION OF THE EMBODIMENTS

The present disclosure is further described in detail below with reference to the accompanying drawings. The accompanying drawings are simplified and illustrate the basic structure of the present disclosure in a schematic way, so they only show constitutions related to the present disclosure.

In the description of the present disclosure, it should be understood that terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial", and "circumferential" indicate directional or positional relationships based on the accompanying drawings. They are merely used for the convenience and simplicity of the description of the present disclosure, instead of indicating or implying that the demonstrated device or element is located in a specific direction or is constructed and operated in a specific direction. Therefore, they cannot be construed as limitations to the present disclosure. Moreover, a feature defined by "first" or "second" explicitly or implicitly includes one or more such features. In the description of the present disclosure, "a plurality of" means two or above two, unless otherwise stated.

In the description of the present disclosure, it should be noted that unless otherwise expressly specified and defined, terms such as "mounted", "interconnected", and "connected" should be understood in a broad sense. For example, they can be fixed connections, detachable connections, or integral connections; can be mechanical connections or electrical connections; can be direct connections or indirect connections through an intermediary; and can be internal communications between two elements. The specific meanings of the above terms in the present disclosure can be understood by persons of ordinary skill in the art according to specific situations.

Embodiment 1: An embodiment of the present application provides a monocular ranging method for intelligent driving, which includes the following steps.

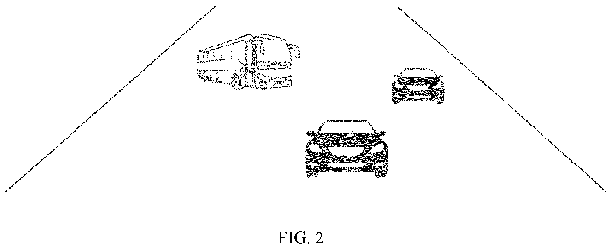

Step S1: Image information is read frame by frame from video streams captured by a vehicle-mounted monocular camera, as shown in FIG. 2. The distances to obstacles in a scene are estimated through the video streams captured by the vehicle-mounted monocular camera, instead of through parallax between two cameras in the prior art, so that the present application is not limited in use and can be widely applied at a low cost.

Step S2: The image information is input into a first convolutional neural network model for detection to obtain a vehicle instance segmentation image and a depth map, the vehicle instance segmentation image containing a detection box of at least one target.

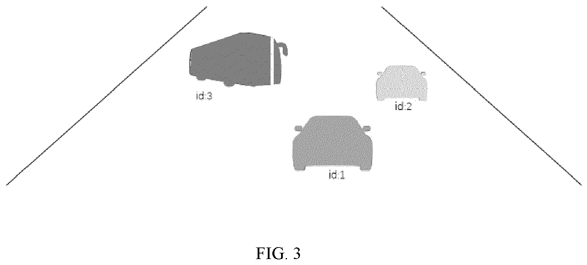

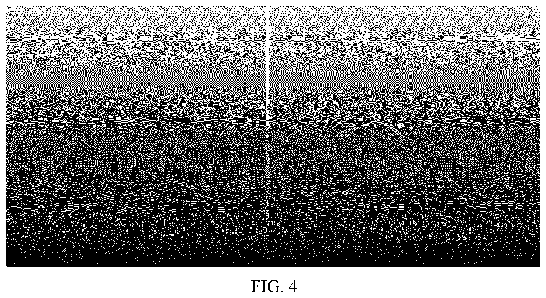

The first convolutional neural network adopts, but not limited to, a SOLOv2 segmentation network structure to obtain a vehicle instance segmentation image, and is configured with a depth map prediction branch to obtain a depth map. The first convolutional neural network achieves high-accuracy and fast image segmentation. If there is one vehicle on the road ahead, only one detection box of the target appears in the vehicle instance segmentation image, and if there are two vehicles on the road ahead, two detection boxes of the targets appear in the vehicle instance segmentation image. The number of the detection boxes of the targets in the vehicle instance segmentation image is the same as the number of the vehicles on the road ahead, as shown in FIG. 3. Depth is used to represent the distance from each point in a road scene ahead to the vehicle-mounted monocular camera. That is, each pixel value in the depth map represents the distance from a certain point in a road scene ahead to the vehicle-mounted monocular camera. The depth map refers to an image formed by replacing grayscale values of a grayscale image with longitudinal depth values of an object, and the length and width of the depth map are the same as the length and width of the image information. FIG. 4 is a schematic diagram of a depth map in this embodiment. In FIG. 4, a darker color indicates a shorter distance to the subject vehicle and a lighter color indicates a longer distance to the subject vehicle.

Step S3: A rectangular box corresponding to the detection box of each target is extracted, the vehicle instance segmentation image is segmented according to the rectangular box to obtain a ROI image corresponding to the target, and the ROI image is input into a second convolutional neural network model for detection to obtain information of the target, the information of the target including a category and an actual height of the target and a height of the target in the image.

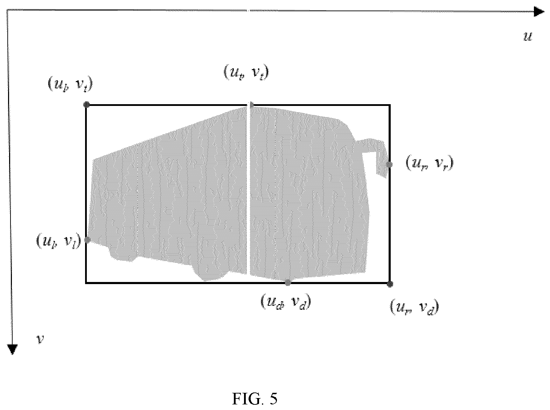

In this embodiment, as shown in FIG. 5, the extracting of the rectangular box corresponding to the detection box of each target in the step S3 specifically includes the following steps.

S31: A pixel coordinate system $o\text{-}uv$ is created.

S32: An upper boundary point $(u_t,v_t)$, a lower boundary point $(u_d,v_d)$, a left boundary point $(u_l,v_l)$, and a right boundary point $(u_r,v_r)$ of the detection box of the target are acquired, the detection box of the target being, but not limited to, polygonal.

S33: A rectangular box corresponding to the detection box of the target is drawn according to the coordinates of the upper boundary point, the lower boundary point, the left boundary point, and the right boundary point, the height of the target in the image being $h=v_d\text{-}v_t$.

In this embodiment, the vehicle instance segmentation image is segmented according to the drawn rectangular box based on an image segmentation algorithm to obtain a ROI image corresponding to the target. The second convolutional neural network model detects the ROI image to obtain the category of the target. The second convolutional neural network adopts, but not limited to, a ShuffleNetv2 network structure, which improves the categorization accuracy of the target and increases the processing speed. The category of the target includes, but is not limited to, car, sport utility vehicle (SUV), or bus. The actual height of the target is obtained according to the category of the target. For example, the actual height of a car is 1.5 m, the actual height of an SUV is 1.7 m, and the height of a bus is 3 m. Therefore, the accuracy of the computation result is further improved.

Step S4: A depth ROI image is extracted according to the detection box of the target and the depth map, and a minimum pixel distance in the depth ROI image is computed by using a clustering computation model to obtain pixel coordinates $s(u,v)$ corresponding to the minimum pixel distance, the minimum pixel distance being a first distance D1 from the vehicle-mounted monocular camera to the target in real space. Specifically, the depth ROI image is extracted according to the detection box of the target and the depth map, and the coordinates of the detection box of the target in the vehicle instance segmentation image are fused with the depth map to obtain the depth ROI image.

In this embodiment, the clustering computation model in the step S4 includes:
S41: n pixels are set in the depth ROI image, each of the pixels being a cluster S and a depth value corresponding to the pixel being $d_n$ during initial computation.

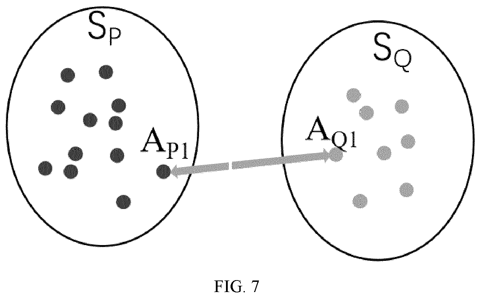

S42: The distance between every two of the clusters is computed and the two closest clusters are merged into one cluster. Specifically, FIG. 7 shows two clusters $S_P$ and $S_Q$, the cluster $S_P$ has $A_P$ pixels, and the cluster $S_Q$ has $A_Q$ pixels. The difference $d_{PQ1}$ between the depth value $d_{p1}$ corresponding to the pixel $A_{P1}$ and the depth value $d_{Q1}$ corresponding to the pixel $A_{Q1}$ is the distance between the pixel $A_{P1}$ and the pixel $A_{Q1}$, and the distance between the two clusters $L(S_P, S_Q)=\min(d_{pQ})$ is obtained.

S43: The step S42 is repeated till the distance between every two of the clusters is greater than a threshold T.

S44: The number of all the pixels in each of the two clusters is counted to obtain the cluster $S_{Max}$ with the maximum number of pixels, and the depth value corresponding to each of the pixels in the cluster $S_{Max}$ is read to obtain a minimum depth value $d_{min}$ and a pixel corresponding to the minimum depth value in the cluster $S_{Max}$, the minimum depth value $d_{min}$ being the minimum pixel distance.

When one minimum depth value $d_{min}$ exists, the pixel coordinates $s(u,v)$ corresponding to the minimum depth value $d_{min}$ are obtained. When a plurality of minimum depth values $d_{min}$ exist, a plurality of pixel coordinates are obtained. The optical axis of the vehicle-mounted monocular camera intersects with the pixel coordinate system $o\text{-}uv$ at $m(u_0,v_0)$, and the Euclidean distance from each of the pixels to the point m is computed. When the Euclidean distance is minimum, the pixel coordinates $s(u,v)$ corresponding to the minimum depth value $d_{min}$ are obtained. The coordinates of the detection box of the target in the vehicle instance segmentation image are fused with the depth map to obtain the minimum pixel distance. The minimum pixel distance is the closest distance from the vehicle ahead to the subject vehicle, and the coordinates of the pixel in the pixel coordinate system are obtained according to the minimum pixel distance. Therefore, the computation of subsequent steps is facilitated, the computation deviation is reduced, and the accuracy of the computation result is improved.

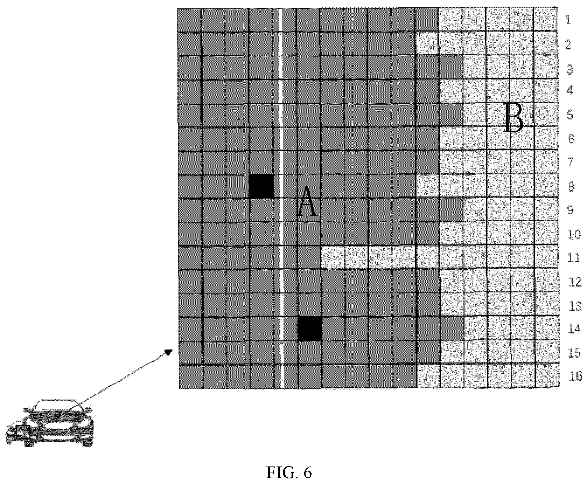

It should be noted that when the vehicle-mounted monocular camera captures images, the nearby target will block the distant target due to their distances to the camera, so that the outline of the nearby target is relatively complete, while the outline of the distant target is partially missing. The front and back positional relationships between the targets can be obtained according to the depth and can be used to compute the distance from the vehicle-mounted monocular camera to the distant target. An example is given below to illustrate the situation where blocking occurs in the depth map. FIG. 6 shows a 16* 16 depth ROI image, where the pixels in the region A represent the depth of the nearby target, the pixels in the region B represent the depth of the distant target, and the black pixels represent noises. When the distance to the distant target is to be computed, the interference caused by the noises and the nearby target to the computation should be avoided. The clustering computation model in this embodiment is used to obtain three clusters, namely, a cluster $S_A$ of the region A, a cluster $S_B$ of the region B, and an anomaly cluster $S_Y$. The number of the pixels in each of the clusters is counted to obtain the cluster $S_A$ with the maximum number of pixels. In the cluster $S_A$, the minimum depth value is the minimum distance, that is, the first distance from the vehicle-mounted monocular camera to the target in real space. The clustering computation model can remove the interference caused by the nearby target and the noises, including nearby noises and distant noises, to the target distance computation, thereby improving the accuracy and stability of the computation result. In addition, the computation is accurate regardless of the orientation and position of a vehicle and no matter whether it is blocked or not, so the model can be widely used.

Step S5: A second distance D2 from the vehicle-mounted monocular camera to the target in real space is computed by using a geometric ranging model based on the information of the target and the pixel coordinates s(u,v).

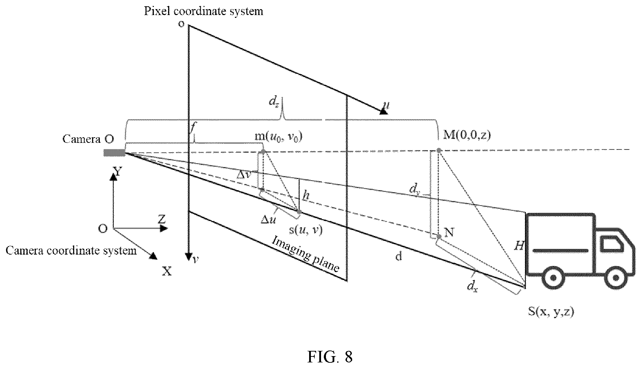

In this embodiment, as shown in FIG. 8, the geometric ranging model in the step S5 includes:

S51: A camera coordinate system O-XYZ is created with the vehicle-mounted monocular camera as an origin, and the Z-axis of the camera coordinate system is perpendicular to the plane of the pixel coordinate system *o-uv*.

S52: When the pixel coordinates are s(u,v) in the pixel coordinate system *o-uv,* the optical axis intersects with the pixel coordinate system *o-uv* at m($u_0,v_0$), the actual height of the target is *H,* the height of the target in the image is *h,* S(x,y,z) is the closest point of the target in the camera coordinate system, the SMN plane is parallel to the imaging plane, the optical axis intersects with the SMN plane at M, and the coordinates of M are (0,0,z) in the camera coordinate system, the second distance D2 from the vehicle-mounted monocular camera to the target in real space is computed by the following formulas:

$$d_z = (H \times f_y)/h$$

$$\Delta u = u - u_0$$

$$\Delta v = v - v_0$$

$$d_x = (d_z \times \Delta u)/f_x$$

$$d_y = (d_z \times \Delta v)/f_y$$

$$D2 = \sqrt{d_x^2 + d_y^2 + d_z^2},$$

where $d_z$ is the distance of OM, $d_x$ is the distance from S to the OYZ plane, $d_y$ is the distance from S to the OXZ plane, $f_x$ and $f_y$ are intrinsic parameters of the vehicle-mounted monocular camera, $\Delta u$ is a distance difference between the pixel s and the point m on the u-axis, and $\Delta v$ is a distance difference between the pixel s and the point m on the v-axis.

Step S6: Fusion computing is performed on the first distance D1 and the second distance D2 to finally obtain a distance from the vehicle-mounted monocular camera to the target in real space.

Specifically, a standard deviation $\sigma1$ of the first distance D1 and a standard deviation $\sigma2$ of the second distance D2 are acquired and a distance fusion standard deviation is computed by the following formula:

$$k = \sigma 1^2 \Big/ \left( \sigma 1^2 + \sigma 2^2 \right)^2 .$$

A distance D3 from the vehicle-mounted monocular camera to the target in real space is finally obtained according to the distance fusion standard deviation by the following formula:

$$D3 = D1 + k(D1\text{-}D2).$$

In this embodiment, a Kalman filtering algorithm is used to process the distance D3 finally obtained from the vehicle-mounted monocular camera to the target in real space, which further improves the measurement accuracy of the ranging method.

In this embodiment, the threshold T is computed before the ranging method of the present disclosure is performed and the computation result is stored. Specifically, in an experimental environment, the nearby target will block the distant target due to their distances to the camera, and such a scene is a special case of this embodiment. When blocking occurs, a high-precision laser rangefinder is used to measure the distances $L_1$ and $L_2$ from the two targets to the subject vehicle and the difference between the two distances is $L_d=|L_1\text{-}L_2|$. Statistics are made on 1000 distance differences $L_d$ in different blocking situations in this embodiment and the minimum $L_{d(min)}$ serves as the threshold T, which improves the computation accuracy of the clustering computation model and further increases the measurement accuracy of the ranging method.

In this embodiment, the ranging error is greater if the target is farther away. In an experimental environment, a high-precision laser rangefinder is used to measure an actual distance $D_{ZS}$ to the target. The steps S1 to S5 in this embodiment are performed to collect 1000 samples of image information, the first distance D1 and the second distance D2 are computed, and 1000 sets of data $[D_{ZS},D1,D2]$ are obtained. $X_1$ and $X_2$ are relative distance ratios of D1 and D2 and are computed by the following formulas:

$$X_1 = (D1\text{-}D_{ZS})/D_{ZS}$$

$$X_2 = (D2\text{-}D_{ZS})/D_{ZS}.$$

The standard deviations $\sigma 1$ and $\sigma 2$ of the relative distance ratios corresponding to $X_1$ and $X_2$ are computed based on the 1000 sets of data $[D_{ZS},D1,D2]$ and are stored. The computation is performed by the following formulas:

$$\overline{X1} = \frac{1}{n}\sum_{i=1}^{n} X_1^i$$

$$\overline{X2} = \frac{1}{n}\sum_{i=1}^{n} X_2^i$$

$$\sigma 1 = \sqrt{\frac{1}{n}\sum_{i}^{n}\left(X_1^i - \overline{X1}\right)^2}$$

$$\sigma 2 = \sqrt{\frac{1}{n}\sum_{i}^{n}\left(X_2^i - \overline{X2}\right)^2}$$

It should be noted that since the computation of the standard deviations $\sigma 1$ and $\sigma 2$ is complex and huge, $\sigma 1$ and $\sigma 2$ are obtained by computer simulation and then stored in this embodiment, and manual computation is rarely used. The computer simulation achieves high accuracy and is fast to operate, thereby improving the measurement accuracy of the ranging method. The standard deviations σ1 and σ2 can be directly obtained in practice.

According to the monocular ranging method for intelligent driving of the present disclosure, the distances to obstacles in a scene are estimated through the video streams captured by the vehicle-mounted monocular camera, instead of through parallax between two cameras in the prior art, so that the present application is not limited in use and can be applied at a low cost. After the original image information is processed, the first distance is computed by using the clustering algorithm model, so that the external interference is effectively removed and the first distance is highly accurate. The second distance is computed by using the geometric ranging model based on the actual data obtained, and the second distance is highly accurate. Fusion computing is performed on the first distance and the second distance to finally obtain the distance to the vehicle ahead in real space. Compared with the monocular ranging in the prior art, the present disclosure achieves higher measurement accuracy and the requirement on the computing capabilities of the processing unit is relatively low, which further reduces the cost.

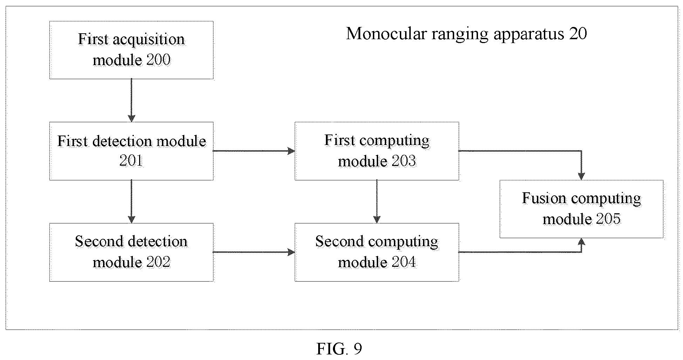

Embodiment 2: An embodiment of the present application provides a monocular ranging apparatus for intelligent driving which is configured for applying the monocular ranging method for intelligent driving. As shown in FIG. 9, the monocular ranging apparatus includes:

a first acquisition module 200, configured to read image information frame by frame from video streams captured by a vehicle-mounted monocular camera;

a first detection module 201, configured to input the image information into a first convolutional neural network model for detection to obtain a vehicle instance segmentation image and a depth map, the vehicle instance segmentation image containing a detection box of at least one target;

a second detection module 202, configured to extract a rectangular box corresponding to the detection box of each target, segment the vehicle instance segmentation image according to the rectangular box to obtain a ROI image corresponding to the target, and input the ROI image into a second convolutional neural network model for detection to obtain information of the target, the information of the target including a category and an actual height of the target and a height of the target in the image;

a first computing module 203, configured to extract a depth ROI image according to the detection box of the target and the depth map, and compute a minimum pixel distance in the depth ROI image by using a clustering computation model to obtain pixel coordinates s(u,v), the minimum pixel distance being a first distance D1 from the vehicle-mounted monocular camera to the target in real space;

a second computing module 204, configured to compute a second distance D2 from the vehicle-mounted monocular camera to the target in real space by using a geometric ranging model based on the information of the target and the pixel coordinates s(u,v); and

a fusion computing module 205, configured to perform fusion computing on the first distance D1 and the second distance D2 to finally obtain a distance from the vehicle-mounted monocular camera to the target in real space.

The first acquisition module 200 and the second detection module 202 are both connected to the first detection module 201, the first computing module 203 is connected to the first detection module 201, the first computing module and the second detection module are both connected to the second computing module 204, and the first computing module 203 and the second computing module 204 are both connected to the fusion computing module 205.

It should be noted that the division of the functional modules is an example to illustrate the functions of the apparatus provided by the above embodiment, and the functions can be implemented by different functional modules according to practical requirements. That is, the internal structure of the apparatus is divided into different functional modules to complete all or a part of the functions described above. In addition, the apparatus provided by the above embodiment shares the same concept as the method embodiment and reference can be made to the method embodiment for the specific implementation, so the details will not be repeated herein.

Embodiment 3: An embodiment of the present application provides a computer device. The computer device includes a processor and a memory, the memory stores at least one instruction or at least one program, and the at least one instruction or the at least one program is loaded and executed by the processor to implement the monocular ranging method provided by the method embodiment.

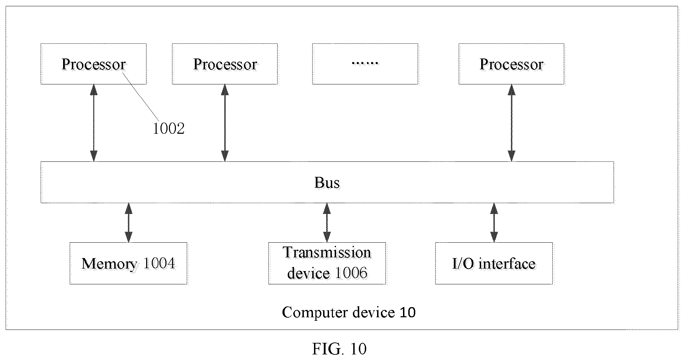

FIG. 10 is a schematic structural diagram of hardware in the device configured for implementing the monocular ranging method according to the embodiment of the present application. The device may be a part of or contain the apparatus or system provided by the embodiment of the present application. As shown in FIG. 10, the computer device 10 may include one or more processors 1002, a memory 1004 for storing data, and a transmission device 1006 for communication, where the processors may be, but not limited to, microcontroller units (MCUs), field-programmable gate arrays (FPGAs), or other processing devices). In addition, the computer device 10 may further include a display, an input/output interface (I/O interface), a universal serial bus (USB) port (which may serve as one of the ports of the I/O interface), a network interface, a power supply, and/or a camera. Persons of ordinary skill in the art can understand that the structure shown in FIG. 10 is merely exemplary and does not limit the structure of the above electronic device. For example, the computer device 10 may also include more or fewer components than those shown in FIG. 10 or have a configuration different from that shown in FIG. 10.

It should be noted that the one or more processors and/or other data processing circuits may generally be referred to as "data processing circuits" herein. The data processing circuit can be embodied in whole or in part as software, hardware, firmware, or any combination thereof. Besides, the data processing circuit may be a single independent processing module, or may be integrated in whole or in part into any of the other elements in the computer device 10 (or a mobile device). As in the embodiment of the present application, the data processing circuit serves as a processor to control, for example, the terminal path selection of a variable resistor connected to the interface.

The memory 1004 is configured to store software programs and modules of application software, and is, for example, a program instruction/data storage device corresponding to the monocular ranging method in the embodiment of the present application. The processor runs the software programs and modules stored in the memory 1004 to execute various functional applications and data processing, that is, to implement the above method. The memory 1004 may be a high-speed random access memory (RAM) or a non-volatile memory such as one or more magnetic storage devices, flash memories, or other non-volatile solid-state memories. In some embodiments, the memory 1004 may be a memory remotely configured as compared with the processor, and such remote memories can be connected to the computer device 10 via a network. The network may be, but not limited to, the Internet, an intranet, a local area network, a mobile communication network, or any combination thereof.

The transmission device 1006 is configured to receive or send data via a network. Specifically, the network may be a wireless network provided by a communications provider of the computer device 10. In an embodiment, the transmission device 1006 includes a network interface controller (NIC), which can be connected to other network devices via a base station and thereby communicate with the Internet. In an embodiment, the transmission device 1006 may be a radio frequency (RF) module which communicates with the Internet wirelessly.

The display is, for example, a touch-screen liquid crystal display (LCD) which enables interaction between a user and a user interface of the computer device 10 (or a mobile device).

Embodiment 4: An embodiment of the present application further provides a computer readable storage medium. The computer readable storage medium may be configured in a server to store at least one instruction or at least one program used in the implementation of the monocular ranging method in the method embodiment. The at least one instruction or the at least one program is loaded and executed by the processor to implement the monocular ranging method provided by the method embodiment.

Alternatively, in this embodiment, the storage medium may be located in at least one network server among a plurality of network servers of a computer network. Alternatively, in this embodiment, the storage medium may be, but not limited to, a program code storage medium such as a USB flash drive, a read-only memory (ROM), a RAM, a removable hard disk, a magnetic disk, or an optical disc.

Embodiment 5: An embodiment of the present disclosure further provides a computer program product or a computer program. The computer program product or computer program includes computer instructions, and the computer instructions are stored in the computer readable storage medium. The processor of the computer device reads the computer instructions from the computer readable storage medium, and executes the computer instructions to enable the computer device to perform the monocular ranging method provided in each of the above alternative embodiments.

Embodiment 6: An embodiment of the present disclosure further provides a vehicle, which includes the monocular ranging apparatus for intelligent driving.

It should be noted that the sequence of the above embodiments of the present application is merely for the convenience of description, and does not imply the preference among the embodiments. The above has described specific embodiments of the present application. Other embodiments are within the scope of the appended claims. In some cases, the actions or steps described in the claims can be performed in an order different from that in the embodiments and still achieve desired results. In addition, the processes depicted in the accompanying drawings are not necessarily required to be in a specific order or in a consecutive order to achieve the desired results. Multitasking and parallel processing are also possible or can be advantageous in some embodiments.

All the embodiments in the present application are described in a progressive manner, reference can be made to each other for the same or similar parts of the embodiments, and each embodiment focuses on the differences from the other embodiments. Since the apparatus, device, and storage medium embodiments are basically similar to the method embodiment, they are described simply and reference can be made to the description about the method embodiment for the related parts.

Persons of ordinary skill in the art should understand that all or a part of the steps of the above embodiment can be implemented by hardware or by a program instructing relevant hardware. The program can be stored in a computer readable storage medium, and the storage medium is a ROM, a magnetic disk, an optical disc, or the like.

Enlightened by the preferred embodiments of the present disclosure and based on the above description, persons involved in the art can make various changes and modifications without departing from the scope of the technical idea of the present disclosure. The technical scope of the present disclosure is not limited to the content of the specification and shall be determined according to the appended claims.

**Claims**

1. A computer- implemented ranging method for intelligent driving, comprising the following steps:

step S1: reading image information frame by frame from video streams captured by a vehicle-mounted monocular camera;

step S2: inputting the image information into a first convolutional neural network model for detection to obtain a vehicle instance segmentation image and a depth map, the vehicle instance segmentation image containing a detection box of at least one target;

step S3: extracting a rectangular box corresponding to the detection box of each target, segmenting the vehicle instance segmentation image according to the rectangular box to obtain a region of interest (ROI) image corresponding to the target, and inputting the ROI image into a second convolutional neural network model for detection to obtain information of the target,

the information of the target comprising a category and an actual height of the target and a height of the target in the image;

**characterized in that** the method further comprises step S4: extracting a depth ROI image according to the detection box of the target and the depth map, and computing a minimum pixel distance in the depth ROI image by using a clustering computation model to obtain pixel coordinates s(u,v), the minimum pixel distance being a first distance D1 from the vehicle-mounted monocular camera to the target in real space;

step S5: computing a second distance D2 from the vehicle-mounted monocular camera to the target in real space by using a geometric ranging model based on the information of the target and the pixel coordinates s(u,v); and

step S6: performing fusion computing on the first distance D1 and the second distance D2 to finally obtain a distance from the vehicle-mounted monocular camera to the target in real space;

wherein the clustering computation model in the step S4 comprises:

S41: setting n pixels in the depth ROI image, each of the pixels being a cluster S and a depth value corresponding to the pixel being $d_n$ during initial computation;

S42: computing a distance between every two of the clusters and merging the two closest clusters into one cluster;

S43: repeating the step S42 till the distance between every two of the clusters is greater than a threshold T; and

S44: counting a number of all the pixels in each of the two clusters to obtain the cluster $S_{Max}$ with a maximum number of pixels, and reading the depth value corresponding to each of the pixels in the cluster $S_{Max}$ to obtain a minimum depth value $d_{min}$ and a pixel corresponding to the minimum depth value in the cluster $S_{Max}$, the minimum depth value $d_{min}$ being the minimum pixel distance, wherein

when one minimum depth value $d_{min}$ exists, the pixel coordinates s(u,v) corresponding to the minimum depth value $d_{min}$ are obtained; or

when a plurality of minimum depth values $d_{min}$ exist, a plurality of pixel coordinates are obtained; an optical axis of the vehicle-mounted monocular camera intersects with the pixel coordinate system *o-uv* at m($u_0,v_0$), a Euclidean distance from each of the pixels to the point m is computed, and when the Euclidean distance is minimum, the pixel coordinates s(u,v) corresponding to the minimum depth value $d_{min}$ are obtained;

the step S6 specifically comprises: acquiring a standard deviation $\sigma1$ of the first distance D1 and a standard deviation $\sigma2$ of the second distance D2, wherein the standard deviation $\sigma1$ and the standard deviation $\sigma2$ are calculated by the following:

a high-precision laser rangefinder is used to measure an actual distance $D_{ZS}$ to the target, the steps S1 to S5 are performed to collect 1000 samples of image information, the first distance D1 and the second distance D2 are computed, and 1000 sets of data [$D_{ZS}$,D1,D2] are obtained, $X_1$ and $X_2$ are relative distance ratios of D1 and D2 and are computed by the following formulas:

$$X_1 = (D1\text{-}D_{ZS})/D_{ZS}$$

$$X_2 = (D2\text{-}D_{ZS})/D_{ZS};$$

the standard deviations σ1 and σ2 of the relative distance ratios corresponding to $X_1$ and $X_2$ are computed based on the 1000 sets of data [$D_{ZS}$,D1,D2], wherein the computation is performed by the following formulas:

$$\overline{X1} = \frac{1}{n}\sum_{i=1}^{n} X_1^i$$

$$\overline{X2} = \frac{1}{n}\sum_{i=1}^{n} X_2^i$$

$$\sigma1 = \sqrt{\frac{1}{n}\sum_{i}^{n}\left(X_1^i - \overline{X1}\right)^2}$$

$$\sigma2 = \sqrt{\frac{1}{n}\sum_{i}^{n}\left(X_2^i - \overline{X2}\right)^2}$$

, and computing a distance fusion standard deviation by the following formula:

$$k = \sigma1^2 / \left(\sigma1^2 + \sigma2^2\right)^2$$ ;

finally obtaining a distance D3 from the vehicle-mounted monocular camera to the target in real space according to the distance fusion standard deviation by the following formula:

$$D3 = D1 + k(D1\text{-}D2);$$

wherein the extracting of the rectangular box corresponding to the detection box of each target in the step S3 specifically comprises the following steps:

S31: creating a pixel coordinate system o-uv;
S32: acquiring an upper boundary point ($u_t,v_t$), a lower boundary point ($u_d,v_d$), a left boundary point ($u_l,v_l$), and a right boundary point ($u_r,v_r$) of the detection box of the target; and
S33: drawing a rectangular box corresponding to the detection box of the target according to the coordinates of the upper boundary point, the lower boundary point, the left boundary point, and the right boundary point, the height of the target in the image being $h=v_d\text{-}v_t$; and wherein the geometric ranging model in the step S5 comprises:

S51: creating a camera coordinate system O-XYZ with the vehicle-mounted monocular camera as an origin, a Z-axis of the camera coordinate system being perpendicular to a plane of the pixel coordinate system o-uv; and
S52: when the pixel coordinates are s(u,v) in the pixel coordinate system o-uv, the optical axis intersects with the pixel coordinate system o-uv at $m(u_0,v_0)$, the actual height of the target is H, the height of the target in the image is h, S(x,y,z) is the closest point of the target in the camera coordinate system, an SMN plane is parallel to the imaging plane, the optical axis intersects with the SMN plane at M, and the coordinates of M are (0,0,z) in the camera coordinate system, computing the second distance D2 from the vehicle-mounted monocular camera to the target in real space by the following formulas:

$$d_z = (H \times f_y)/h$$

$$\Delta u = u - u_0$$

$$\Delta v = v - v_0$$

$$d_x = (d_z \times \Delta u)/f_x$$

$$d_y = (d_z \times \Delta v)/f_y$$

$$D2 = \sqrt{d_x^2 + d_y^2 + d_z^2},$$

wherein $d_z$ is a distance of OM, $d_x$ is a distance from S to an OYZ plane, $d_y$ is a distance from S to an OXZ plane, $f_x$ and $f_y$ are intrinsic parameters of the vehicle-mounted monocular camera, $\Delta u$ is a distance difference between the pixel s and the point m on a u-axis, and $\Delta v$ is a distance difference between the pixel s and the point m on a v-axis.

2. The monocular ranging method for intelligent driving according to claim 1, **characterized in that** a Kalman filtering algorithm is used to process the distance D3 finally obtained from the vehicle-mounted monocular camera to the target in real space.

3. A data processing apparatus comprising means for carrying out the steps of the method according to claim 1 or claim 2

4. A computer program comprising instructions which, when the program is executed by a computer, cause the computer to carry out the steps of the method according to claim 1 or claim 2.

5. A computer readable storage medium, **characterized in that** the computer readable storage medium stores computer programs, and a processor executes the computer programs to implement the monocular ranging method for intelligent driving according to claim 1 or claim 2.

6. A vehicle, **characterized by** comprising the data processing apparatus according to claim 3.

**Patentansprüche**

1. Computerimplementiertes Verfahren zur Abstandsmessung für intelligentes Fahren, das folgende Schritte umfasst:

Schritt S1: Auslesen von Bildinformationen Frame für Frame aus Videostreams, die von einer am Fahrzeug montierten monokularen Kamera aufgenommen werden;
Schritt S2: Eingeben der Bildinformationen in ein erstes neuronales Faltungsnetzwerkmodell zur Detektion, um ein Fahrzeug-Instanzsegmentierungsbild und eine Tiefenkarte zu erhalten, wobei das Fahrzeug-Instanzsegmentierungsbild eine Detektionsbox von mindestens einem Ziel enthält;
Schritt S3: Extrahieren einer rechteckigen Box, die der Detektionsbox jedes Ziels entspricht, Segmentieren des Fahrzeug-Instanzsegmentierungsbildes gemäß der rechteckigen Box, um ein Region von Interesse (ROI)-Bild zu erhalten, das dem Ziel entspricht, und Eingeben des ROI-Bildes in ein zweites neuronales Faltungsnetzwerkmodell zur Detektion, um Informationen des Ziels zu erhalten,
wobei die Informationen des Ziels eine Kategorie und eine tatsächliche Höhe des Ziels sowie eine Höhe des Ziels im Bild umfassen;
**dadurch gekennzeichnet, dass** das Verfahren ferner umfasst: Schritt S4: Extrahieren eines Tiefen-ROI-Bildes gemäß der Detektionsbox des Ziels und der Tiefenkarte und Berechnen eines minimalen Pixelabstands im Tiefen-ROI-Bild unter Verwendung eines Clustering-Berechnungsmodells, um Pixelkoordinaten s(u,v) zu erhalten, wobei der minimale Pixelabstand ein erster Abstand D1 von der am Fahrzeug montierten monokularen Kamera zum Ziel im realen Raum ist;
Schritt S5: Berechnen eines zweiten Abstands D2 von der am Fahrzeug montierten monokularen Kamera zum Ziel im realen Raum unter Verwendung eines geometrischen Abstandsmessmodells auf der Grundlage der Informationen des Ziels und der Pixelkoordinaten s(u,v); und

Schritt S6: Durchführen einer Fusionsberechnung für den ersten Abstand D1 und den zweiten Abstand D2, um endgültig einen Abstand von der am Fahrzeug montierten monokularen Kamera zum Ziel im realen Raum zu erhalten;

wobei das Clustering-Berechnungsmodell im Schritt S4 umfasst:

S41: Einstellen von n Pixeln im Tiefen-ROI-Bild, wobei jedes der Pixel ein Cluster S darstellt und ein Tiefenwert, der dem Pixel entspricht, $d_n$ während einer initialen Berechnung darstellt;

S42: Berechnen eines Abstands zwischen jeweils zwei der Cluster und Zusammenführen der beiden nächstgelegenen Cluster zu einem Cluster;

S43: Wiederholen des Schritts S42, bis der Abstand zwischen jeweils zwei der Cluster größer als ein Schwellenwert T ist; und

S44: Zählen einer Anzahl aller Pixel in jedem der beiden Cluster, um den Cluster $S_{Max}$ mit einer maximalen Anzahl von Pixeln zu erhalten, und Auslesen des Tiefenwerts, der jedem der Pixel im Cluster $S_{Max}$ entspricht, um einen minimalen Tiefenwert $d_{min}$ und ein Pixel zu erhalten, das dem minimalen Tiefenwert im Cluster $S_{Max}$ entspricht, wobei der minimale Tiefenwert $d_{min}$ der minimale Pixelabstand ist, wobei

beim Vorliegen eines minimalen Tiefenwerts $d_{min}$ die Pixelkoordinaten s(u,v) erhalten werden, die dem minimalen Tiefenwert $d_{min}$ entsprechen; oder wobei

bei Vorliegen einer Vielzahl von minimalen Tiefenwerten $d_{min}$ eine Vielzahl von Pixelkoordinaten erhalten wird, wobei eine optische Achse der am Fahrzeug montierten monokularen Kamera das Pixelkoordinatensystem o-uv bei m($u_0,v_0$) schneidet und ein euklidischer Abstand von jedem der Pixel zum Punkt m berechnet wird, wobei, wenn der euklidische Abstand minimal ist, die Pixelkoordinaten s(u,v) erhalten werden, die dem minimalen Tiefenwert $d_{min}$ entsprechen;

wobei der Schritt S6 insbesondere umfasst: Erfassen einer Standardabweichung σ1 des ersten Abstands D1 und einer Standardabweichung σ2 des zweiten Abstands D2, wobei die Standardabweichung σ1 und die Standardabweichung σ2 wie folgt berechnet werden, dass

ein hochpräziser Laser-Entfernungsmesser verwendet wird, um einen tatsächlichen Abstand $D_{ZS}$ zum Ziel zu messen, und die Schritte S1 bis S5 durchgeführt werden, um 1000 Bildinformationsproben zu sammeln, wobei der erste Abstand D1 sowie der zweite Abstand D2 berechnet werden und 1000 Datensätze [$D_{ZS}$,D1,D2] erhalten werden, wobei $X_1$ und $X_2$ relative Abstandsverhältnisse von D1 und D2 sind und durch die folgenden Formeln berechnet werden:

$$X_1 = (D1\text{-}D_{ZS})/D_{ZS}$$

$$X_2 = (D2\text{-}D_{ZS})/D_{ZS};$$

wobei die Standardabweichungen σ1 und σ2 der relativen Abstandsverhältnisse, die $X_1$ und $X_2$ entsprechen, auf der Grundlage der 1000 Datensätze [$D_{ZS}$,D1,D2] berechnet werden, wobei die Berechnung durch die folgenden Formeln durchgeführt wird:

$$\overline{X1} = \frac{1}{n}\sum_{i=1}^{n} X_1^i$$

$$\overline{X2} = \frac{1}{n}\sum_{i=1}^{n} X_2^i$$

$$\sigma1 = \sqrt{\frac{1}{n}\sum_{i}^{n}\left(X_1^i - \overline{X1}\right)^2}$$

$$\sigma 2 = \sqrt{\frac{1}{n}\sum_{i}^{n}\left(X_2^i - \overline{X2}\right)^2}$$

, und Berechnen einer Abstandsfusions-Standardabweichung durch die folgende Formel:

$$k = \sigma 1^2 \Big/ \left(\sigma 1^2 + \sigma 2^2\right)^2 \; ;$$

Endgültiges Erhalten eines Abstands D3 von der am Fahrzeug montierten monokularen Kamera zum Ziel im realen Raum gemäß der Abstandsfusions-Standardabweichung durch die folgende Formel:

$$D3 = D1 + k(D1\text{-}D2);$$

wobei das Extrahieren der rechteckigen Box, die der Detektionsbox jedes Ziels entspricht, im Schritt S3 insbesondere die folgenden Schritte umfasst:

S31: Erstellen eines Pixelkoordinatensystems *o-uv;*
S32: Erfassen eines oberen Begrenzungspunkts $(u_t,v_t)$, eines unteren Begrenzungspunkts $(u_d,v_d)$, eines linken Begrenzungspunkts $(u_l,v_l)$ und eines rechten Begrenzungspunkts $(u_r,v_r)$ der Detektionsbox des Ziels; und
S33: Aufzeichnen einer rechteckigen Box, die der Detektionsbox des Ziels entspricht, gemäß den Koordinaten des oberen Begrenzungspunkts, des unteren Begrenzungspunkts, des linken Begrenzungspunkts und des rechten Begrenzungspunkts, wobei die Höhe des Ziels im Bild $h=v_d\text{-}v_t$ ist; und wobei das geometrische Abstandsmessmodell im Schritt S5 umfasst:

S51: Erstellen eines Kamerakoordinatensystems O-XYZ mit der am Fahrzeug montierten monokularen Kamera als Ursprung, wobei eine Z-Achse des Kamerakoordinatensystems senkrecht zu einer Ebene des Pixelkoordinatensystems *o-uv* steht; und
S52: Berechnen des zweiten Abstands D2 von der am Fahrzeug montierten monokularen Kamera zum Ziel im realen Raum durch die folgenden Formeln, wenn die Pixelkoordinaten s(u,v) im Pixelkoordinatensystem *o-uv* sind, die optische Achse das Pixelkoordinatensystem *o-uv* bei $m(u_0,v_0)$ schneidet, die tatsächliche Höhe des Ziels H ist, die Höhe des Ziels im Bild $h$ ist, S(x,y,z) der nächstgelegene Punkt des Ziels im Kamerakoordinatensystem ist, eine SMN-Ebene parallel zur Bildebene ist, die optische Achse die SMN-Ebene in M schneidet und die Koordinaten von M (0,0,z) im Kamerakoordinatensystem sind:

$$d_z = (H \times f_y)/h$$

$$\Delta u = u - u_0$$

$$\Delta v = v - v_0$$

$$d_x = (d_z \times \Delta u)/f_x$$

$$d_y = (d_z \times \Delta v)/f_y$$

$$D2 = \sqrt{d_x^2 + d_y^2 + d_z^2},$$

worin $d_z$ ein Abstand von OM ist, $d_x$ ein Abstand von S zu einer OYZ-Ebene ist, $d_y$ ein Abstand von S zu einer OXZ-Ebene ist, $f_x$ und $f_y$ intrinsische Parameter der am Fahrzeug montierten monokularen Kamera sind, $\Delta u$ eine Abstandsdifferenz zwischen dem Pixel s und dem Punkt m auf einer u-Achse ist und $\Delta v$ eine Abstandsdifferenz zwischen dem Pixel s und dem Punkt m auf einer v- Achse ist.

2. Computerimplementiertes Verfahren zur Abstandsmessung für intelligentes Fahren nach Anspruch 1, **dadurch gekennzeichnet, dass** ein Kalman-Filteralgorithmus verwendet wird, um den endgültig erhaltenen Abstand D3 von der am Fahrzeug montierten monokularen Kamera zum Ziel im realen Raum zu verarbeiten.

3. Datenverarbeitungsvorrichtung, umfassend Mittel zur Durchführung von Schritten eines Verfahrens nach Anspruch 1 oder 2.

4. Computerprogramm, umfassend Anweisungen, die beim Ausführen eines Programms durch einen Computer diesen Computer veranlassen, Schritte eines Verfahrens nach Anspruch 1 oder 2 durchzuführen.

5. Computerlesbares Speichermedium, **dadurch gekennzeichnet, dass** in dem computerlesbaren Speichermedium Computerprogramme gespeichert sind und ein Prozessor die Computerprogramme ausführt, um ein Verfahren nach Anspruch 1 oder 2 zu implementieren.

6. Fahrzeug, **gekennzeichnet durch** eine Datenverarbeitungsvorrichtung nach Anspruch 3.

**Revendications**

1. Procédé de télémétrie mis en œuvre par ordinateur pour la conduite intelligente, comprenant les étapes suivantes consistant à :

étape S1 : lire des informations d'image trame par trame à partir de flux vidéo capturés par une caméra monoculaire montée sur un véhicule ;
étape S2 : entrer les informations d'image dans un premier modèle de réseau neuronal convolutif pour la détection afin d'obtenir une image de segmentation d'instance de véhicule et une carte de profondeur, l'image de segmentation d'instance de véhicule contenant un boîtier de détection d'au moins une cible ;
étape S3 : extraire un boîtier rectangulaire correspondant au boîtier de détection de chaque cible, segmenter l'image de segmentation d'instance de véhicule selon le boîtier rectangulaire afin d'obtenir une image de région d'intérêt (ROI) correspondant à la cible, et entrer l'image de ROI dans un second modèle de réseau neuronal convolutif pour la détection afin d'obtenir des informations de la cible,
les informations de la cible comprenant une catégorie et une hauteur réelle de la cible et une hauteur de la cible dans l'image ;
**caractérisé en ce que** le procédé comprend en outre l'étape S4 consistant à : extraire une image de ROI de profondeur en fonction du boîtier de détection de la cible et de la carte de profondeur, et calculer une distance de pixel minimale dans l'image de ROI de profondeur à l'aide d'un modèle de calcul de regroupement afin d'obtenir des coordonnées de pixel s(u,v), la distance de pixels minimale étant une première distance D1 entre la caméra monoculaire montée sur le véhicule et la cible dans un espace réel ;
étape S5 : calculer une seconde distance D2 entre la caméra monoculaire montée sur le véhicule et la cible dans un espace réel à l'aide d'un modèle de télémétrie géométrique sur la base des informations de la cible et des coordonnées de pixel s(u,v) ; et
étape S6 : effectuer un calcul de fusion sur la première distance D1 et la seconde distance D2 afin d'obtenir finalement une distance entre la caméra monoculaire montée sur le véhicule et la cible dans un espace réel ;
dans lequel le modèle de calcul de regroupement à l'étape S4 comprend :

S41 : la définition de n pixels dans l'image de ROI de profondeur, chacun des pixels étant un groupement S et une valeur de profondeur correspondant au pixel qui est $d_n$ pendant un calcul initial ;
S42 : le calcul d'une distance entre chaque paire de groupements et la fusion des deux groupements les plus proches en un seul groupement ;
S43 : la répétition de l'étape S42 jusqu'à ce que la distance entre chaque paire de groupements soit supérieure à un seuil T ; et
S44 : le comptage d'un nombre de tous les pixels dans chacun des deux groupements afin d'obtenir le groupement $S_{Max}$ avec un nombre maximal de pixels, et la lecture de la valeur de profondeur correspondant à chacun des pixels dans le groupement $S_{Max}$ afin d'obtenir une valeur de profondeur minimale $d_{min}$ et un pixel

correspondant à la valeur de profondeur minimale dans le groupement $S_{Max}$, la valeur de profondeur minimale $d_{min}$ étant la distance de pixels minimale, dans lequel

lorsqu'il existe une valeur de profondeur minimale $d_{min}$, les coordonnées de pixel s(u,v) correspondant à la valeur de profondeur minimale $d_{min}$ sont obtenues ; ou

lorsqu'il existe une pluralité de valeurs de profondeur minimale $d_{min}$, une pluralité de coordonnées de pixel sont obtenues ; un axe optique de la caméra monoculaire montée sur le véhicule croise le système de coordonnées de pixel *o-uv* au niveau de m($u_0,v_0$), une distance euclidienne entre chacun des pixels et le point m est calculée, et lorsque la distance euclidienne est minimale, les coordonnées de pixel s(u,v) correspondant à la valeur de profondeur minimale $d_{min}$ sont obtenues ;

l'étape S6 comprend spécifiquement : l'acquisition d'un écart-type $\sigma1$ de la première distance D1 et d'un écart-type $\sigma2$ de la seconde distance D2, dans lequel l'écart-type $\sigma1$ et l'écart-type $\sigma2$ sont calculés comme suit :

un télémètre laser de haute précision est utilisé pour mesurer une distance réelle $D_{ZS}$ par rapport à la cible, les étapes S1 à S5 sont effectuées afin de collecter 1 000 échantillons d'informations d'image, la première distance D1 et la seconde distance D2 sont calculées, et 1 000 ensembles de données [$D_{ZS}$,D1,D2] sont obtenus, $X_1$ et $X_2$ sont des rapports de distance relatifs de D1 et de D2 et sont calculés à l'aide des formules suivantes :

$$X_1 = (D1 - D_{ZS})/D_{ZS}$$

$$X_2 = (D2 - D_{ZS})/D_{ZS} \; ;$$

les écarts-types $\sigma1$ et $\sigma2$ des rapports de distance relatifs correspondant à $X_1$ et à $X_2$ sont calculés sur la base des 1 000 ensembles de données [$D_{ZS}$,D1,D2], dans lequel le calcul est effectué à l'aide des formules suivantes :

$$\overline{X1} = \frac{1}{n}\sum_{i=1}^{n} X_1^i$$

$$\overline{X2} = \frac{1}{n}\sum_{i=1}^{n} X_2^i$$

$$\sigma1 = \sqrt{\frac{1}{n}\sum_{i}^{n}\left(X_1^i - \overline{X1}\right)^2}$$

$$\sigma2 = \sqrt{\frac{1}{n}\sum_{i}^{n}\left(X_2^i - \overline{X2}\right)^2},$$

et le calcul d'un écart-type de fusion de distance à l'aide de la formule suivante :

$$k = \sigma1^2 \Big/ \left(\sigma1^2 + \sigma2^2\right)^2 \; ;$$

l'obtention finale d'une distance D3 entre la caméra monoculaire montée sur le véhicule et la cible dans un espace réel en fonction de l'écart-type de fusion de distance à l'aide de la formule suivante :

$$D3 = D1 + k(D1 - D2) \; ;$$

dans lequel l'extraction du boîtier rectangulaire correspondant au boîtier de détection de chaque cible à l'étape S3 comprend spécifiquement les étapes suivantes consistant à :

S31 : créer un système de coordonnées de pixel *o-uv* ;
S32 : acquérir un point limite supérieur ($u_t$,$v_t$), un point limite inférieur ($u_d$,$v_d$), un point limite gauche ($u_l$,$v_l$) et un point limite droit ($u_r$,$v_r$) du boîtier de détection de la cible ; et
S33 : dessiner un boîtier rectangulaire correspondant au boîtier de détection de la cible en fonction des coordonnées du point limite supérieur, du point limite inférieur, du point limite gauche et du point limite droit,
la hauteur de la cible dans l'image étant $h=v_d-v_t$ ; et dans lequel le modèle de télémétrie géométrique à l'étape S5 comprend :

S51 : la création d'un système de coordonnées de caméra O-XYZ avec la caméra monoculaire montée sur le véhicule comme origine, un axe Z du système de coordonnées de caméra étant perpendiculaire à un plan du système de coordonnées de pixel *o-uv* ; et
S52 : lorsque les coordonnées de pixel sont s(u,v) dans le système de coordonnées de pixel *o-uv,* l'axe optique croise le système de coordonnées de pixel *o-uv* au niveau de m($u_0$,$v_0$), la hauteur réelle de la cible est *H*, la hauteur de la cible dans l'image est *h*, S(x,y,z) est le point le plus proche de la cible dans le système de coordonnées de caméra, un plan SMN est parallèle au plan d'imagerie, l'axe optique croise le plan SMN au niveau de M, et les coordonnées de M sont (0,0,z) dans le système de coordonnées de caméra, le calcul de la seconde distance D2 entre la caméra monoculaire montée sur le véhicule et la cible dans un espace réel à l'aide des formules suivantes :

$$d_z = (H \times f_y)/h$$

$$\Delta u = u - u_0$$

$$\Delta v = v - v_0$$

$$d_x = (d_z \times \Delta u)/f_x$$

$$d_y = (d_z \times \Delta v)/f_y$$

$$D2 = \sqrt{d_x^2 + d_y^2 + d_z^2},$$

dans lequel $d_z$ est une distance de OM, $d_x$ est une distance entre S et un plan OYZ, $d_y$ est une distance entre S et un plan OXZ, $f_x$ et $f_y$ sont des paramètres intrinsèques de la caméra monoculaire montée sur le véhicule, $\Delta u$ est une différence de distance entre le pixel s et le point m sur un axe u, et $\Delta v$ est une différence de distance entre le pixel s et le point m sur un axe v.

2. Procédé de télémétrie mis en œuvre par ordinateur pour la conduite intelligente selon la revendication 1, **caractérisé en ce qu'**un algorithme de filtrage de Kalman est utilisé pour traiter la distance D3 finalement obtenue entre la caméra monoculaire montée sur le véhicule et la cible dans un espace réel.

3. Appareil de traitement de données comprenant des moyens destinés à exécuter les étapes du procédé selon la revendication 1 ou la revendication 2.

4. Programme d'ordinateur comprenant des instructions qui, lorsque le programme est exécuté par un ordinateur, amènent l'ordinateur à exécuter les étapes du procédé selon la revendication 1 ou la revendication 2.

5. Support de stockage lisible par ordinateur, **caractérisé en ce que** le support de stockage lisible par ordinateur stocke des programmes d'ordinateur, et un processeur exécute les programmes d'ordinateur afin de mettre en œuvre le procédé selon la revendication 1 ou la revendication 2.

6. Véhicule, **caractérisé en ce qu'**il comprend l'appareil de traitement de données selon la revendication 3.

S1

Read image information frame by frame from video streams captured by a vehicle-mounted monocular camera

S2

Input the image information into a first convolutional neural network model for detection to obtain a vehicle instance segmentation image and a depth map, the vehicle instance segmentation image containing a detection box of at least one target

S3

Extract a rectangular box corresponding to the detection box of each target, segment the vehicle instance segmentation image according to the rectangular box to obtain a ROI image corresponding to the target, and input the ROI image into a second convolutional neural network model for detection to obtain information of the target, the information of the target including a category and an actual height of the target and a height of the target in the image

S4

Extract a depth ROI image according to the detection box of the target and the depth map, and compute a minimum pixel distance in the depth ROI image by using a clustering computation model to obtain pixel coordinates $s(u,v)$, the minimum pixel distance being a first distance D1 from the vehicle-mounted monocular camera to the target in real space

S5

Compute a second distance D2 from the vehicle-mounted monocular camera to the target in real space by using a geometric ranging model based on the information of the target and the pixel coordinates $s(u,v)$

S6

Perform fusion computing on the first distance D1 and the second distance D2 to finally obtain a distance from the vehicle-mounted monocular camera to the target in real space

FIG. 1

FIG. 2

FIG. 3

FIG. 4

FIG. 5

FIG. 6

FIG. 7

FIG. 8

Monocular ranging apparatus 20

First acquisition
module 200

First detection module
201

First computing
module 203

Second detection
module 202

Second computing
module 204

Fusion computing
module 205

FIG. 9

| Processor | Processor | ······ | Processor |

1002

| Bus |

| Memory 1004 | Transmission device 1006 | I/O interface |

Computer device 10

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022057806 A1

**Non-patent literature cited in the description**

- **LIQIN HUANG et al.** Measuring the absolute distance of a front vehicle from an in-car camera based on monocular vision and instance segmentation. *JOURNAL OF ELECTRONIC IMAGING.*, 24 July 2018, vol. 27 (04)
- Inter-Vehicle Distance Estimation Method Based on Monocular Vision Using 3D Detection. **ZHE THING et al.** IEEE TRANSACTIONS ON VEHICULAR TECHNOLOGY. IEEE, 29 February 2020, vol. 69, 4907-4919

- Improving Online Performance Prediction for Semantic Segmentation. **KLINGNER MARVIN et al.** IEEE/CVF CONFERENCE ON COMPUTER VISION AND PATTERN RECOGNITION WORKSHOPS (CVPRW). IEEE, 19 June 2021, 1-11